# EUROPEAN PATENT APPLICATION

(11) **EP 4 451 074 A1**
(43) Date of publication of application: **23.10.2024**
(21) Application number: 23168946.4
(22) Date of filing: 20.04.2023
(51) Int. Cl.: G05B 19/418, G06N 3/04

(54) **A METHOD OR MONITORING A PRODUCTION OF AN ELECTRONIC COMPONENT BY A MONITORING SYSTEM, COMPUTER PROGRAM PRODUCT, COMPUTER-READABLE STORAGE MEDIUM, AS WELL AS MONITORING SYSTEM**

(71) Applicant: Siemens Aktiengesellschaft, 80333 München (DE)
(72) Inventor: Krompaß, Denis, 85591 Vaterstetten (DE); Eichler, Roman, 90451 Nürnberg (DE); Frikha, Ahmed, 81549 München (DE); Mallandur, Adarsh, 91052 Erlangen (DE)
(74) Representative: Siemens Patent Attorneys

(57) **Abstract**

The invention relates to a method for monitoring a production of an electronic component (14, 16, 18, comprising the steps of receiving first data (24) from an automatic optical inspection device (10), wherein the first data (24) describe components (20) of the electronic component (14, 16, 18); receiving second data (26) from the automatic optical inspection device (10), wherein the second data (26) describe pins (22) of the components (20) of the electronic component (14, 16, 18); providing a neural network (32), wherein the neural network (32) is configured for calculating data with a preset size; determining each size of the received data; comparing the determined size of the first data (24) and second data (26) with the preset size; padding the received first data (24) and second data (26) such that a first data vector is generated in the first size and a second data vector is generated in the second size; generating a mask (28, 30), wherein the mask (28, 30) describes the first data vector concerning the received first data (24) and a first padding and the second data vector concerning the received second data (26) and a second padding; transmitting the first data vector, the second data vector and the mask (28, 30) to the neural network (32); analyzing the electronic component (14, 16, 18) depending on the first data vector and the second data vector; and monitoring the electronic component (14, 16, 18) depending on the analyzation. Furthermore, the invention relates to a computer program product, a computer-readable storage medium, as well as a monitoring system (12).

## Description

Independent of the grammatical term usage, individuals with male, female or other gender identities are included within the term.

The invention relates to a method for monitoring a production of an electronic component by a monitoring system according to the independent claim 1. Furthermore, the invention relates to a computer program product, a computer-readable storage medium, as well as a monitoring system.

In the state of the art so-called automated optical inspection (AOI) is known, which is an automated visual inspection of a printed circuit board (PCB) or LCD, or transistor manufacturer where a camera autonomously scans the device under test for both catastrophic failure, for example missing component, and quality defects, for example fillet size or shape or component skew. It is commonly used in the manufacturing process because it is a non-contact test method. It is implemented at many stages through the manufacturing process including bare board inspection, solo paste inspection (SPI), pre-reflow and post-reflow as well as other stages.

Historically, the primary place for AOI systems has been after solder reflow or post production. Mainly because, post-reflow AOI systems can inspect for most types of defects, for example component placement, solder shorts, missing solder or furthermore, at one place in the line with one single system. In this way the faulty boards are reworked and the other boards are sent to the next process stage.

For manufacturers that deploy AOI machines in their assembly lines, a major concern is the rate of pseudo errors these AOI machines report. Consequently, a manual process must be employed to inspect the rejected PCBs and finally decide which boards can proceed to the next stage, which may be regarded as a pseudo error, or which are reworked, which may be regarded as a real error. An automation of this manual process is desired, and there exist many AI-based works that target the problem of defect detection on PCBs but they rely on images, as the AOI machine and humans. Unfortunately, many AOI machine vendors prohibit the access to the images recorded by the AOI machines and solely store and allow access to trades extracted from the images by their undisclosed algorithms that contain information about the board, its components and component pins. As an alternative to replacing the AOI machine, one option is to use the data produced by the AOI machine to find patterns that discriminate pseudo errors, in particular so-called false-positives, from real errors and in this way reduce the amount of manual post AOI inspections of PCBs. Currently, no specialized AI-based approach that can interface with the special data structures produced by AOI machines are available.

It is an object of the invention to provide a method, a computer program product, a computer-readable storage medium, as well as a monitoring system, by which the amount of false-positive errors from a production of an electronic component is automatically minimized.

This object is solved by a method, a computer program product, a computer-readable storage medium as well, as a monitoring system according to the independent claims. Advantageous forms of embodiments are presented in the dependent claims.

One aspect of the invention relates to a method for monitoring a production of an electronic component by a monitoring system. First data from an automatic optical inspection device are received by an electronic computing device of the monitoring system, wherein the first data describe components of the electronic component. Second data from the automatic optical inspection device (AOI device) are received by the electronic computing device, wherein the second data describe pins of the components of the electronic component. A neural network is provided by the electronic computing device, wherein the neural network is configured for calculating data with a preset first size for the first data and a preset second size for the second data. Each size of the received data is determined by the electronic computing device. The determined size of the first data and the second data are compared with the preset first size and second size for the neural network by the electronic computing device. The received first data and second data are padded such that a first data vector is generated in the first size and a second data vector is generated in a second size by the electronic computing device. A mask is generated by the electronic computing device, wherein the mask describes the first data vector concerning the received first data and a first padding and a second data vector concerning the received second data and a second padding. The first data vector, the second data vector and the mask is transmitted to the neural network. The electronic component is analyzed depending on the first data vector and the second data vector by the neural network then the electronic component is monitored depending on the analyzation.

Therefore, a neural network-based modelling approach is proposed that can process the produced data in its natural form and integrates all measured information of an inspected printed circuit board. By its natural form it is meant that for each printed circuit board there exist measurements for a variable set of components and for each component there exist measurements of a variable set of pins.

Therefore, processing hierarchically organized inputs with variating shapes, in particular number of components and corresponding pins is a non-trivial method. To make this input compatible with a neural network a combination of padding and masking is used. The padding is used to organize each input example, for example data of a single PCB (printed circuit board), in the same shapes arrays that can be batched and digested by the neural network-model. Masking is used to provide the model with the information what parts of the input to ignore, in particular the padding, when processing the data. In particular, the pin data of each component and the component data are organized in separate arrays as depicted.

Therefore, this method is targeting automated faults-positive reduction which directly decreases the manual effort of reinspection of PCBs that were classified as erroneous by the automatic optical inspection device. The advantage of this approach over other data-based approaches is that the hierarchical data generated by the automatic optical inspection device is modelled as-is without information loss. Meaning that more information is used to judge if the PCB in question is truly erroneous. In particular, the data of a whole board can be processed end-to-end by the model which is not possible by of-the-shelf methods since they can not deal with a dynamic input size.

The neural network may also be regarded as the model. In general, the false-positive reduction use-case data sets are characterized by a high class imbalance, which means that there is an imbalance between board inspections where the AOI machine reported a pseudo error (majority) and a real error (minority). Besides training the pseudo/real error classification model, which uses the neural network architecture described, with off-the-shelf stochastic gradient-based optimization methods, additional measures are used to tackle this class-imbalance. For example, the batches are balanced of examples via resampling the minority class (real error), during model training such that between 10 percent and 50 percent of the examples in the batch are boards with real errors. In case the training data consists of different AOI test-patterns the batches are additionally balanced via resampling such that during training, the model is exposed to all AOI test-patterns at similar frequency. Second, the loss function is employed, which further improves training results when training with imbalanced data sets.

According to an embodiment, the electronic component is analyzed in such that the electronic component is classified in an erroneous component or in a non-erroneous component. In particular, the electronic component is analyzed in such, that a real error and/or a pseudo error is classified. Therefore, minimizing pseudo-errors in the production of the electronic component is provided.

In another embodiment a classification of the automatic optical inspection device is taken into consideration by the electronic computing device. In particular, just an electronic component, which is classified from the automatic optical inspection device as erroneous, is analyzed by the electronic computing device. In particular, if the automatic optical inspection device provides the electronic component as non-erroneous no inspection/no monitoring of the monitoring system is provided. Just, if the automatic optical inspection device classifies the electronic component as erroneous, the monitoring system is monitoring these electronic components. The monitoring system then is configured for classifying the electronic components such, that a pseudo-error or a real error of the AOI is detected by the monitoring system. Therefore, minimizing pseudo errors is provided.

In another embodiment the first data vector is a three-dimensional data vector and/or the second data vector is a four-dimensional data vector. In particular, the component data is organized as a three-dimensional array where the first dimension is the batch axis, meaning each entry along that dimension describes a different PCB. The second dimension is the component axis, where each entry describes the measurements of components on a PCB. Note that no order of the components is enforced here. Since the number of components can be different for each PCB this dimension has the size of the maximum number of components seen on the PCBs that are part of the current batch. Finally, the feature-axis is the same for all components since the same kind of measurements are performed on them.

The pin data is organized as a four-dimensional array, where the first two dimensions are the same as in the component data case. The third dimension is the pin axis where each entry describes the measurements of an inspected pin of a component. Note that no order of the pins is enforced here. Since the number of pins can be different for each component on the PCB this dimension has the size of the maximum number of pins seen of the components across all PCBs that are part of the current batch. Therefore, an improved monitoring of the electronic component can be realized.

In another embodiment, the mask is provided as a Boolean masking array. Therefore, in addition to the component data and the pin data, also an information about where the padding is located in the component and pin data is organized as the Boolean masking array. Note that the padding and masking is in general only required when data of multiple boards should be processed by the model at once. A typical requirement by the optimization process applied to train the downstream neural network model. However, also during inference it can make sense to batch data of multiple boards to improve the runtime. Therefore, an improved monitoring of an electronic component is provided.

In another embodiment, the neural network comprises at least a first encoder for the first data vector and a second encoder for the second data vector. In particular, the neural network further comprises at least a third encoder, wherein in the third encoder a first result of the first encoder and a second result of the second encoder are fused. Therefore, a neural network is provided, which improves the monitoring of the electronic component.

In another embodiment, the first encoder and the second encoder are provided with the same encoder structure. Therefore, an easy way for encoding is provided. Alternatively, the structures of each encoder may be different.

According to another embodiment, a zero-padding is used for padding the received data. In particular, where there is no information in the data about the features, the slots are filled with zeros. Therefore, an easy way for generating the data vector is provided.

In another embodiment, the neural network ignores paddings during the analyzation of the first data vector and the second data vector. In particular, the neural network is configured to ignore zero-paddings. Therefore, the neural network can analyze the data, but ignores data, which is not relevant, in particular the padded data. Therefore, an improved analyzation of the electronic component is provided.

In another embodiment, the neural network comprises at least a classifier module for classifying the electronic component. In particular, the classifier module is applied whose output is a single confidence value that the ingested board data represents a pseudo-error. For example, the classifier module is a multi-layer perception (MLP) that ingests the encoding of all component and pin measurements of the board and produces a single confidence if the measurement reflects pseudo-error of the AOI device or not. For example, this MLP may consist of two subsequent fully-connected neural network layers, where the first used a real activation function. Of course, other choices might be reasonable too.

In particular, the proposed method is a computer-implemented method. Therefore, another aspect of the invention relates to a computer program product comprising program code means for performing a method according to the preceding aspect.

Another aspect of the invention relates to a computer-readable storage medium comprising at least the computer program product according to the preceding aspect.

A still further aspect of the invention relates to a monitoring system for monitoring a production of an electronic component, comprising at least one electronic computing device, wherein the monitoring system is configured for performing a method according to the preceding aspect. In particular, the method is performed by the monitoring system.

The electronic computing device may comprise electronic means, for example processors, circuits, in particular integrated circuits, and further electronic components, for performing a method according to the preceding aspect. The electronic computing device may also be regarded as a computing unit. A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Advantageous forms of configuration of the method are to be regarded as advantageous forms of configuration of the computer program product, the computer-readable storage medium as well as the monitoring system. The monitoring system therefore comprises means for performing the method.

For use cases or use situations which may arise in the method and which are not explicitly described here, it may be provided that, in accordance with the method, an error message and/or a prompt for user feedback is output and/or a default setting and/or a predetermined initial state is set. Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.
- FIG 1: shows an abstract representation of data produced by an automatic optical inspection device;
- FIG 2: shows a schematic block diagram according to a structure of PCB data after performing at least a part of the method according to the invention;
- FIG 3: shows a schematic block diagram according to an embodiment of the monitoring system;
- FIG 4: shows a schematic block diagram according to an attention module according to an embodiment of the invention.

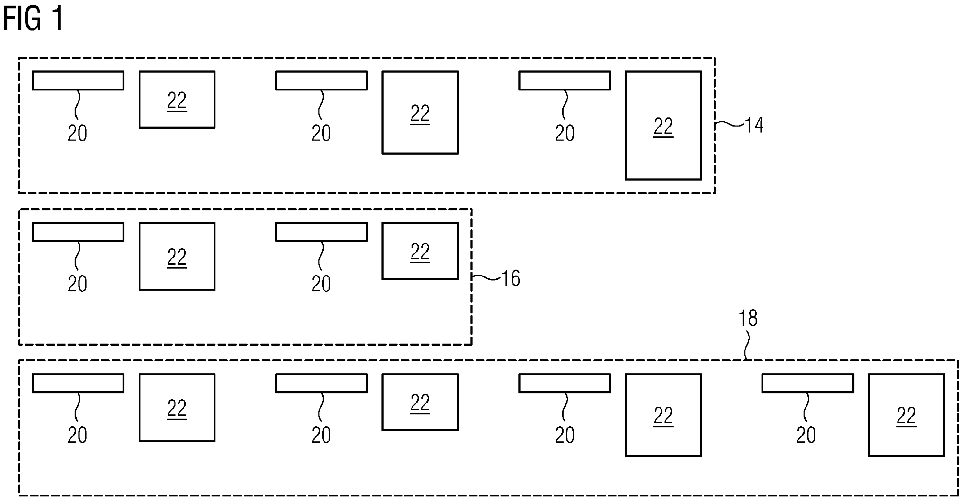

FIG 1 shows an abstract representation of the data produced by an automatic optical inspection device 10 (AOI device) from a monitoring system 12. In particular, according to the shown embodiment, three different printed circuit boards, which may be also regarded as an electronic component 14, 16, 18, were inspected, wherein each board consists of a different set of components 20. The first electronic component 14 has three components 20, for example a capacitor, a resistor and another resistor, the second electronic component 16 consists of two components 20 and the third electronic component 18 comprises four components 20. Each component 20 internally might have a different number of pins 22 and consequently the amount of measurement data produced per component 20 is varying.

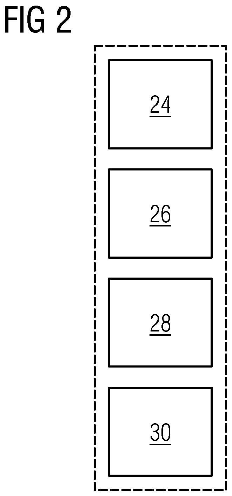

FIG 2 shows a structure of an electronic component 14, 16, 18 after applying padding and masking. In particular FIG 2 shows first data 24, wherein the first data 24 describes the components 20 of the electronic component 14, 16, 18. Furthermore, second data 26 are shown, wherein the second data 26 describes the pins 22 of the components 20 of the electronic components 14, 16, 18. Furthermore, a first mask 28 for the component data 24 is shown as well as a second mask 30 for the second data 26 is shown. The first mask 28 and the second mask 30 may be fused to one mask 28, 30.

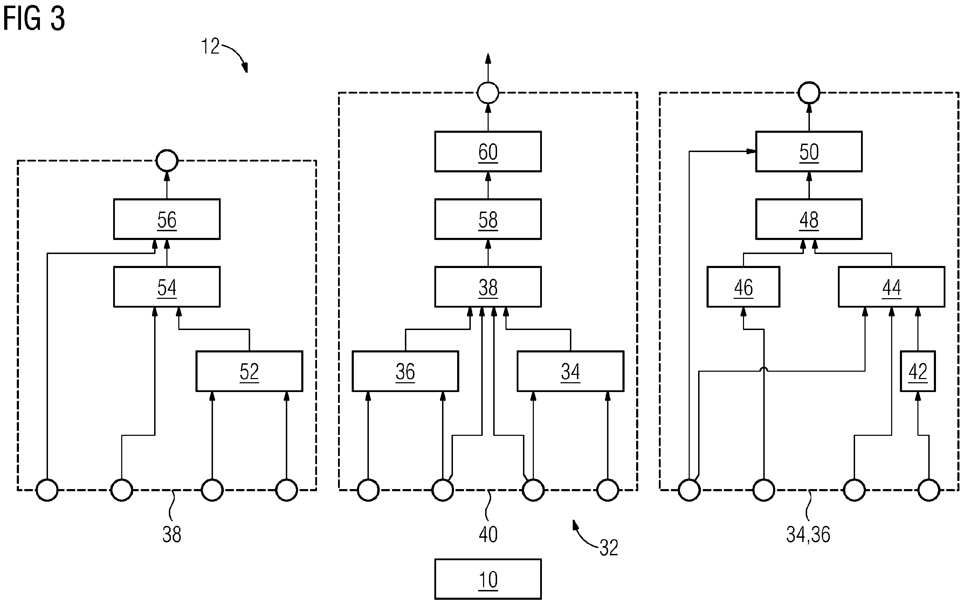

In particular FIG 1 and 2 shows a hierarchical processing of organized inputs with varying shapes, in particular the number of components 20 and corresponding pins 22. To make this input compatible with a neural network 32 (FIG 3) a combination of padding and masking is used. The padding is used to organize each input example, for example data of a single PCB (printed circuit board), in the same shaped arrays that can be batched and digested by the neural network 32. Masking is used to provide the model with information what parts of the input to ignore, in particular the padding, when processing the data. In the shown case, the data of each component 20 and the pins 22 are separated in arrays.

In particular FIG 2 shows, that the first data 24 is organized in a three-dimensional array where the first dimension is a batch axis, meaning each entry along the dimension describes a different electronic component 14, 16, 18. The second dimension is the component axis, where each entry describes the measurements of the component 20 on an electronic component 14, 16, 18. Note that no order of the components 20 is enforced here. Since the number of components 20 can be different for each electronic component 14, 16, 18 this dimension has the size of the maximum number of components 20 seen on the electronic components 14, 16, 18 that are part of the current batch. Finally, the feature-axis is the same for all components 20 since the same kind of measurements are performed on them. Assuming the electronic components 14, 16, 18 a data of FIG 1 being batched, the batch dimension would have the size 3, where the component axis would have a size of 4. The data of the first electronic component 14 and the second electronic component 16 will be zero-padded along the component axis, since they do not have four components 20. Finally, the feature-axis is the same for all components 20 since the same kind of measurements are performed on them.

The second data 26 is organized in a four-dimensional array, where the first two dimensions are the same as in the component data case. The third dimension is the pin axis where each entry describes the measurements of an expected pin 22 of a component 20. Note that no order of the pins 22 is enforced here. Since the number of pins 22 can be different for each component 20 on the electronic components 14, 16, 18 this dimension has the size of the maximum number of pins 22 seen of the components 20 across all electronic components 14, 16, 18 that are part of the current batch.

Furthermore is assumed that the component data is stored by an array C of a shape n × c × f and the pin data by an array of P of the shape n × c × p × h, where n is the batch size, c is the maximum number of components 20 observed on the electronic component 14, 16, 18 in the batch, f are the different kind of measurements performed on a component 20, p is the maximum number of pins 22 observed in the batch and h are the measurements performed on a pin 22. Then C_{n=0,c=1} are the component measurements of the second component 20 on the first electronic component 14. C_{n=1,c=3} are the component measurements of the fourth component on the second electronic component 16, where no fourth component 20 exists on the second electronic component 16 and therefore will be all padding values / zeros. P_{n=1,c=1,p=0} are the measurement values of the first pin 22 of the second component 20 of the second electronic component 16.

In addition to the component data and the pin data, information about where the padding is located in the component 20 and the pin data array is organized in a Boolean masking array.

Note that the padding and masking is generally only required when data of multiple boards should be processed by the neural network 32 at once. A typical requirement by the optimization process applied to train the downstream neural network-model. However, also during interference it can make sense to batch data of multiple boards to improve the runtime.

FIG 3 shows a schematic block diagram according to an embodiment of the monitoring system 12, in particular of the neural network 32. Giving the input representation as described above, the neural network 32 is proposed that it can properly process it. In particular, the neural network 32 consists of four modules 34, 36, 38, 40. A first encoder 34 for the component measurement which ingest the batch of the component data and the component data mask. A second encoder 36 for the pin measurement which ingest the batch of component data and the component data mask. After each pin 22 and component 20 of the board have been encoded with respect to their measurements, a third encoder 38 is applied that fuses all the previous, in particular varying number of, encodings, considering also the mask 28, 30, into one fixed size encoding that represents the state of the ingested board with respect to the observed measurements of components 20 and corresponding pin 22. Finally, a fourth encoder, in particular a so-called classifier module 40, is applied whose output is a single confidence value that the ingested board data represents a pseudo-error. In the following, the four components 34, 36, 38, 40 are described in more detail.

For the encoding of the pins or components the same encoder structure each is provided, where the encoders for pins and components do not share any model parameters. Consequently, there is no differentiation between pins and components and they may be simply called entities in the following. Therefore, the structure of the first encoder 34 and the second encoder 36 is described in more detail.

First the input measurements are differentiated into three categories: Categorical measurements (including binary) (e.g. "component type" or "pin type"); Numerical measurements (e.g. "component_high", "electrode_length"); cyclical numerical measurements (e.g. "component_angle_from_board", "electrode_angle_from_board").

In addition, the masks 28, 30 are passed to the encoder module too, since the encoder is applied on all entities of the batch at once, which can contain zero-paddings. Each of the C categorical measurement is passed through its own embedding layer 46, which transforms each categorical input into a d-dimensional vector in a learned embedding space. The cyclical numerical features are replaced applying a sin and cosine-based transformation 42 on them and concatenated (Concatenation 48) to the other numerical features. The complete set of numerical features of the entity is then passed through a mask batch normalization 44, which normalizes these inputs. Note that the mask 28, 30 is used by the mask batch normalization 44 such that zero padding values are ignored during normalization. The resulting normalized numerical inputs are then concatenated with the categorical embeddings and fed into a fully connected neural network layer (Dense layer 50) that results in the encoding of the entities. Note that the task of this module is to fuse all the available information of an entity, meaning if for example data of 10 entities goes in, 10 vectors in a learned latent space (encodings) that represent the fused information are produced.

The task of the component and pin encoder, in particular the first encoder 34 and the second encoder 36, is to encode the available information per component 20 and per pin 22. The task of the board encoder, in particular the third encoder 38, is to combine the encodings of all component 20 and pin 22 measurement available of a PCB to result in an encoding for the whole board.

In the first step the encodings of all pins 22 of a component 20 are fused using a pin aggregator 52. In the second step, the resulting encoding of all pins 22 of a component 20 are concatenated (Concatenation 54) to the encoding of the corresponding component 20. Finally, the enriched component encodings are fused by passing them through a component aggregator 56. The result is an encoding for the whole PCB.

The pin aggregator 52 fuses the encodings of the pin measurements for each component 20 but ignores the paddings. Here, multiple reasonable choices for an aggregation function can be made: max function, applying the max across all pin encodings; mean function, applying the mean across all pin encodings; an attention module.

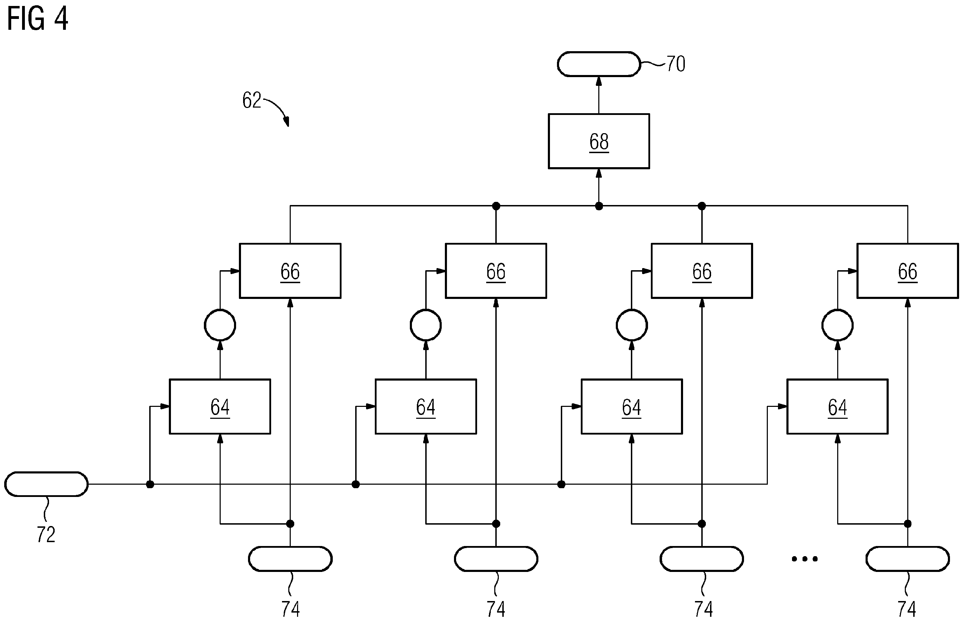

In case of the attention module, weights for a weighted mean can be computed using an attention mechanism as depicted in Figure 4 or by applying multi-headed attention as provided in off-shelf libraries as pytorch . The latter is used to implement so called cross-attention where not the inputs to the module (the pin encodings) are also used as queries, but a single query is applied which can either be learned as part of the complete architecture or the corresponding component encoding is used.

Note again that if the input is a set of pin encodings where each pin encoding is a vector of size k then the pin aggregator 52 will output a single encoding of size k that represents the fused encodings.

FIG 4 shows an embodiment of an attention module 62 where the attention weights are computed by feeding the component encoding together with the pin encodings into a shared attention network (dense layer 64). The resulting weights are normalized to add up to 1.0 using a softmax function. Subsequently, each pin-encoding is multiplied with its corresponding weight (a scalar). Finally, the reweighted pin-encodings are added. Therefore, Fig. 4 shows a plurality of dense layer 64, a plurality of multiplication layer 66, a plurality of addition layers 68, pin encodings 70, component encodings 72, as well as further pin encodings 74.

The component aggregator 56 according to Fig. 3 fuses the encodings of the component measurements (enriched by the encoded measurements of the pins) for each board but ignores the paddings. Here, multiple reasonable choices for an aggregation function can be made: max function, applying the max across all component encodings; mean function, applying the mean across all component encodings; an attention module.

The attention on the component encodings can be computed by applying multi-headed attention as provided in off-shelf libraries as pytorch. In contrast to the pin aggregator 52 the query must be learned as part of the complete architecture in this case.

Note that if the input is a set of component encodings where each component encoding is a vector of size h then the component aggregator 56 will output a single encoding of size h that represents the fused encodings.

The classifier 40 is a multi-layer perceptron (MLP) that ingests the encoding of all component and pin measurements of the board and produces a single confidence if the measurements reflect pseudo error of the AOI device or not. In the shown case this MLP consists of two subsequent fully-connected neural network layers (dense layer 58, 60), where the first dense layer 58 uses a ReLU activation function. Of course other choices might be reasonable too.

## Claims

1. A method for monitoring a production of an electronic component (14, 16, 18) by a monitoring system (12), comprising the steps of:
- receiving first data (24) from an automatic optical inspection device (10) by an electronic computing device of the monitoring system (12), wherein the first data (24) describe components (20) of the electronic component (14, 16, 18) ;
- receiving second data (26) from the automatic optical inspection device (10) by the electronic computing device, wherein the second data (26) describe pins (22) of the components (20) of the electronic component (14, 16, 18);
- providing a neural network (32) by the electronic computing device, wherein the neural network (32) is configured for calculating data with a preset first size for the first data (24) and a preset second size for the second data (26);
- determining each size of the received data by the electronic computing device;
- comparing the determined size of the first data (24) and second data (26) with the preset first size and second size for the neural network (32) by the electronic computing device;
- padding the received first data (24) and second data (26) such that a first data vector is generated in the first size and a second data vector is generated in the second size by the electronic computing device;
- generating a mask (28, 30) by the electronic computing device, wherein the mask (28, 30) describes the first data vector concerning the received first data (24) and a first padding and the second data vector concerning the received second data (26) and a second padding;
- transmitting the first data vector, the second data vector and the mask (28, 30) to the neural network (32);
- analyzing the electronic component (14, 16, 18) depending on the first data vector and the second data vector by the neural network (32); and
- monitoring the electronic component (14, 16, 18) depending on the analyzation.

2. A method according to claim 1, wherein the electronic component (14, 16, 18) is analyzed in such that the electronic component (14, 16, 18) is classified in an erroneous component or in a non-erroneous component.

3. A method according to claim 1 or 2, wherein a classification of the automatic optical inspection device (10) is taken into consideration by the electronic computing device.

4. A method according to claim 3, wherein just an electronic component (14, 16, 18), which is classified from the automatic optical inspection device (10) as erroneous, is analyzed by the electronic computing device.

5. A method according to any of claims 1 to 4, wherein the first data vector is a three-dimensional data vector and/or the second data vector is a four-dimensional data vector.

6. A method according to claim 5 any of claims 1 to 5, wherein the mask (28, 30) is provided as a Boolean masking array.

7. A method according to any of claims 1 to 6, wherein the neural network (32) comprises at least a first encoder (34) for the first data vector and a second encoder (36) for the second data vector.

8. A method according to claim 7, wherein the neural network (32) further comprises at least a third encoder (38), wherein in the third encoder (38) a first result of the first encoder (34) and a second result of the second encoder (36) are fused.

9. A method according to claim 7 or 8, wherein the first encoder (34) and the second encoder (36) are provided with a same encoder structure.

10. A method according to any of claims 1 to 9, wherein a zero-padding is used for padding the received data.

11. A method according to any of claims 1 to 10, wherein the neural network (32) ignores paddings during the analyzation of the first data vector and the second data vector.

12. A method according to any of claims 1 to 11, wherein the neural network (32) comprises at least a classifier module (40) for classifying the electronic component (14, 16, 18).

13. A computer program product comprising program code means for performing a method according to any of claims 1 to 12.

14. A computer-readable storage medium comprising at least the computer program product according to claim 13.

15. A monitoring system (12) for monitoring a production of an electronic component (14, 16, 18), comprising at least one electronic computing device, wherein the monitoring system (12) is configured for performing a method according to any of claims 1 to 12.
